# EUROPÄISCHE PATENTANMELDUNG

(11) **EP 0 763 914 A2**
(43) Veröffentlichungstag der Anmeldung: **19.03.1997**
(21) Anmeldenummer: 96109775.5
(22) Anmeldetag: 18.06.1996
(51) Int. Cl.: H04L 12/56, H04Q 11/04

(54) **Verfahren und Anordnung zum Anpassen der Übertragungsbitrate einer nach dem asynchronen Transfermodus arbeitenden Datenmultiplexeinrichtung**

(30) Priorität: 28.08.1995 DE 19531611
(71) Anmelder: SIEMENS AKTIENGESELLSCHAFT, 80333 München (DE)
(72) Erfinder: Foglar, Andreas, 81245 München (DE)

(57) **Zusammenfassung**

Verfahren und Anordnung zum Anpassen der Übertragungsbitrate jeder einzelnen von mehreren Verbindungen an die zur Verfügung stehende Bitratenkapazität bei einer nach dem asynchronen Transfermodus arbeitenden Datenmultiplexeinrichtung mit den Verfahrensschritten:
a) Speichern der für alle Verbindungen insgesamt zur Verfügung stehenden Bitrate;
b) fortlaufendes Ermitteln der tatsächlichen Bitrate aller Verbindungen zusammen;
c) fortlaufendes Berechnen der Differenz zwischen der zur Verfügung stehenden und der tatsächlichen Bitrate;
d) fortlaufendes Ermitteln der Anzahl derjenigen Verbindungen ohne Unterlastung;
e) fortlaufendes rekursives Berechnen eines aktuellen Aufteilungswertes aus dem bisherigen Aufteilungswert, der Anzahl der Verbindungen ohne Unterlastung und Differenz zwischen der zur Verfügung stehenden und tatsächlichen Bitrate;
f) Einschreiben des Aufteilungswertes in Kapazitätsverwaltungszellen, wenn der aktuelle Aufteilungswert kleiner ist als der in den Kapazitätsverwaltungszellen bereits enthaltenen Wert; und
g) Einstellen der Übertragungsbitrate jeder einzelnen Verbindung entsprechend dem Wert der jeweiligen Kapazitätsverwaltungszellen.

## Beschreibung

Die Erfindung betrifft ein Verfahren und eine Anordnung zum Anpassen der Übertragungsbitrate jeder einzelnen von mehreren Verbindungen an die zur Verfügung stehende Bitratenkapazität einer nach dem asynchronen Transfermodus arbeitenden Datenmultiplexeinrichtung.

Beim asynchronen Transfermodus (ATM = Asynchronous Transfer Mode) einem von der CCITT (Comitté Consultatif International Télégraphique e Téléphonique) festgelegten und in dem Artikel "ATM-High Speed mit drei Buchstaben", Funkschau 7-1995, Seiten 40 bis 43 allgemein beschriebenen Standard, handelt es sich um ein Vermittlungsverfahren, bei dem die Information in Zellen gebündelt ist und die Zellen nicht notwendigerweise periodisch zwischen Sender und Empfänger ausgetauscht werden. Bei der Vermittlung der Zellen werden die Daten des Senders zu Portionen einheitlicher Größe, beispielsweise sogenannten Paketen oder Zellen, zusammengefaßt und diese jeweils mit einer Kopfzeile, dem Header, versehen. Die Kopfzeile enthält Angaben über Sender und Empfänger. Das Netz besteht beispielsweise aus miteinander verbundenen Computern als Datenmultiplexeinrichtungen. Jeder von ihnen liest die Kopfzeilen der einlaufenden Pakete und entscheidet danach wohin sie als nächstes zu schicken sind, damit sie ihrem Zielort näher kommen. Die Datenmultiplexeinrichtungen können auch feststellen, ob eine Verbindungsleitung ausgefallen ist, um dann eine andere Route für den Datentransfer zu wählen, ohne dabei den Absende- oder Zielcomputer zu behelligen. Unter Umständen werden bei einigen Systemen die Pakete auf unterschiedlichen Wegen befördert und treffen dadurch nicht in der richtigen Reihenfolge ein. In diesem Falle muß der Zielcomputer die Pakete wieder richtig zusammenstellen. Ein Durcheinander bei den eintreffenden Paketen kann auch entstehen, wenn eines erneut abgeschickt werden mußte, weil ein Übertragungsfehler festgestellt worden ist. Bei der sogenannten virtuellen Datenpaket-Vermittlung wird in die Kopfzeile des Datenpaketes nicht nur der Zielcomputer, sondern auch der Pfad und/oder mögliche Ausweichpfade eingetragen, so daß alle Pakete auf dem selben Weg ihr Ziel erreichen.

Bei der Datenpaket-Vermittlung kann der Sender mit hoher Geschwindigkeit übertragen, während der Adressat nur mit niedriger Geschwindigkeit empfängt. Der Datentransfer wird dabei nicht unterbrochen sondern nur gedrosselt, da überschüssige Datenpakete in den Datenmultiplexeinrichtungen zwischengespeichert werden können. Es können jedoch Datenstaus auftreten, wenn der Paketfluß die Speicher- und Übertragungskapazität des Netzwerkes übersteigt. Dann müssen die entsprechenden Datenmultiplexeinrichtungen Pakete, die sie nicht mehr speichern oder weitergeben können, einfach wegwerfen. Daher sind Verfahren zum Entdecken und Verhindern von Netzüberlasten für die Weiterentwicklung der Datenpaket-Vermittlung wichtig. Bei bestimmten Diensten darf außerdem eine minimale Datenübertragungsrate nicht unterschritten werden, wie beispielsweise bei einer Videokonferenz, bei der ein Mindestdatenfluß notwendig ist, um ein "Zerhacken" der Bild- und Toninformationen zu verhindern.

Bei einem besonderen Verkehrstyp des asynchronen Transfermodus, nämlich dem Verkehr mit verfügbarer Bitrate (ABR = Available Bit Rate), wird die Bitrate der Datensender durch das Netzwerk gesteuert. Für ABR-Verbindungen ermittelt das Netzwerk fortlaufend die optimale Bitrate für jeden Teilnehmer, um die maximal mögliche Ausnutzung der Kapazität der Verbindungen zu erzielen, und übermittelt diese als explizite Bitraten an die Teilnehmer. Das ABR-Verfahren ist beispielsweise in "The Enhanced Rate Based ABR Scheme", BRAVE-WP1.3-ROK-95001-TD-CC/b, März 1995 beschrieben und ist im besonderen für Anwendungen geeignet, bei denen die Teilnehmer durch Personalcomputer oder Server gegeben sind. Diese Einrichtungen rufen einen Start-Stop-Verkehr hervor, d.h., daß Phasen mit maximaler Bitrate und Ruhephasen einander abwechseln können. Die aktiven genauso wie die inaktiven Phasen schwanken zeitlich sehr stark. Die Phasendauer kann dabei im Millisekundenbereich aber auch im Minuten- oder sogar Stundenbereich je nach Anwendung liegen. Da sowohl Bitraten bis zur maximal möglichen Bitrate, als auch Pausen sowie alle dazwischen liegenden Werte unvorhersehbar auftreten können, ist es sehr schwierig für das Netzwerk, verschiedene Datensender über eine Verbindung unter Verwendung statistischer Methoden zu multiplexen. Das dem ABR-Verfahren zugrundeliegende Prinzip geht davon aus, daß mehrere Verbindungen eine gegebene Übertragungskapazität zusammen nutzen. Dabei wird die Übertragungskapazität zwischen den aktiven Datensendern "gerecht" aufgeteilt. Das Netzwerk und darin insbesondere der oder die Datenmultiplexeinrichtungen haben die Aufgabe, einen Aufteilungswert (Fair Share), der die Aufteilung unter den einzelnen Datensendern wiedergibt, zu bilden und diesen den Datensendern mitzuteilen.

Zur Ermittlung des Aufteilungswertes wird im einfachsten Fall die insgesamt zur Verfügung stehende Übertragungskapazität durch die Anzahl der aktiven Verbindungen geteilt. Jedoch ist in der Regel eine derartige Aufteilung nicht zweckmäßig, da auch Verbindungen auftreten können, die auf eine geringere Bitrate als die ihnen zugeteilte begrenzt sein können. In diesem Fall nämlich würde sich eine nicht optimale Ausnutzung der zur Verfügung stehenden Übertragungskapazität ergeben. Deshalb wird ein neuer Aufteilungswert ermittelt, der die von einer Verbindung nicht genutzte Übertragungskapazität unter den übrigen aktiven Verbindungen aufteilt. Tritt nun eine weitere Verbindung hinzu, so kommt es kurzfristig zu einer Überlastsituation, da die Bitraten aller Verbindungen zusammen die zur Verfügung stehende Übertragungskapazität übersteigen. Der Überlastfall tritt so lange auf, bis der Aufteilungswert entsprechend angepaßt ist. In der Zwischenzeit werden die überschüssigen Zellen in der Datenmultiplexeinrichtung zwischengespeichert. Der Überlastfall kann aber auch dann auftreten, wenn beispielsweise die Begrenzung auf eine bestimmte Bitrate wegfällt. Auch in diesem Fall ist ein Anpassen des Aufteilungswertes erforderlich.

Zur Mitteilung der expliziten Übertragungsrate, d.h. der gewünschten Bitrate, an die Teilnehmer werden spezielle ATM-Zellen, sogenannte Kapazitätsverwaltungszellen (RM-Zellen; RM = Resorce Management) verwendet. Jeder Teilnehmer reiht seine Zellen periodisch in einen sogenannten Benutzerzellenstrom ein und zwar beispielsweise entweder nach einer bestimmten Zeitdauer oder nach einer bestimmten Anzahl von Benutzerzellen. Der empfangende Teilnehmer schleift die RM-Zellen zurück und invertiert das Richtungsbit, um diese Zellen als rückwartsfließende RM-Zellen zu kennzeichnen. Die Datenmultiplexeinrichtungen aktualisieren das explizite Bitratenfeld der rücklaufenden RM-Zellen nur in dem Fall, daß ihr aktueller Aufteilungswert kleiner ist als die durch die RM-Zellen angezeigte Bitrate. Somit bestimmt das Verbindungsstück mit der kleinsten verfügbaren Kapazität die Übertragungsrate für die jeweilige Verbindung.

Es ist wünschenswert, den optimalen Aufteilungswert möglichst genau und in möglichst kurzer Zeit automatisch zu bestimmen und den aktuellen Aufteilungswert automatisch den passierenden RM-Zellen mitzugeben.

Aufgabe der Erfindung ist es, ein Verfahren und eine Anordnung zum Anpassen der Übertragungsbitrate einer nach den asynchronen Transfermodus arbeitenden Datenmultiplexeinrichtung bereitzustellen, die diese Anforderungen erfüllen.

Die Aufgabe wird durch ein Verfahren nach Patentanspruch 1 bzw. eine Anordnung nach Patentanspruch 10 gelöst. Ausgestaltungen und Weiterbildungen des Erfindungsgedankens sind Gegenstand von Unteransprüchen.

Die Erfindung hat den Vorteil, daß sie nur geringen Aufwand erfordert und daher auch direkt in Hardware implementiert werden kann, d.h. auch ohne Einsatz eines Mikroprozessors oder ähnlichem, wodurch sich die Reaktionszeit des Netzwerkes erheblich verbessert.

Die Erfindung wird nachfolgend anhand der in den Figuren der Zeichnung dargestellten Ausführungsbeispiele näher erläutert. Es zeigt:
- Figur 1: eine Ausführungsform einer Anordnung zur Durchführung des erfindungsgemäßen Verfahrens und
- Figur 2: eine bevorzugte Ausführungsform einer Anordnung zum Ermitteln der tatsächlichen Bitrate aller Verbindungen zusammen bei der Anordnung nach Figur 1.

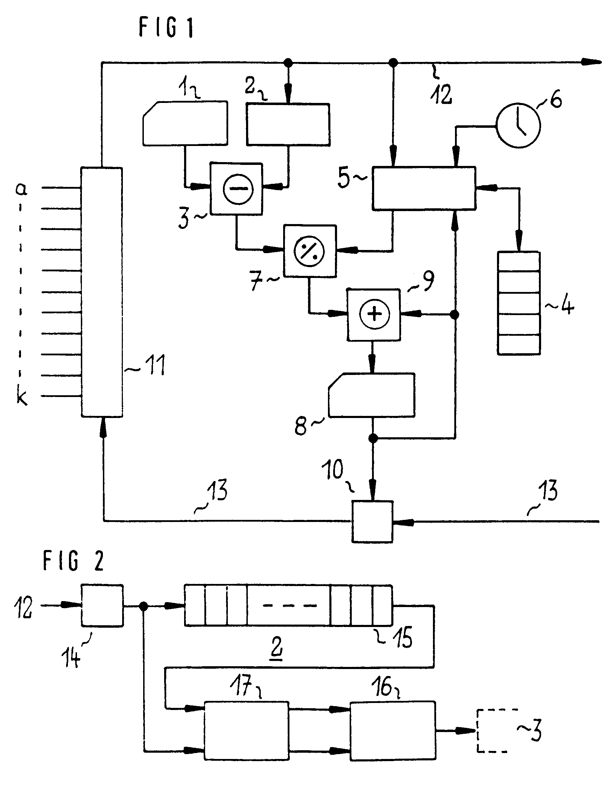

Gemäß Figur 1 enthält eine erfindungsgemäße Anordnung zum Anpassen der Übertragungsbitrate jeder einzelnen von mehreren Verbindungen a-k an die zur Verfügung stehende Bitratenkapazität bei einer nach dem asynchronen Transfermodus arbeitenden Datenmultiplexeinrichtung 11 ein Register 1, in dem die für alle Verbindungen a-k insgesamt zur Verfügung stehende Übertragungsbitrate abgelegt ist. Weiterhin ist eine Meßeinrichtung 2 zum fortlaufenden Ermitteln der tatsächlichen Bitrate aller Verbindungen a-k zusammen vorgesehen, die dazu Benutzerzellen und die vorwärts fließenden, einschließenden RM-Zellen auf dem Übertragungskanal 12 liest und auswertet. Die Ausgangssignale des Registers 1 und der Meßeinrichtung 2 werden einer Subtrahiereinrichtung 3 zugeführt, die fortlaufend die Differenz dieser beiden Signale und damit die Differenz zwischen der zur Verfügung stehenden und der tatsächlichen Bitrate berechnet. Im Idealfall ist die Differenz gleich Null. Tatsächlich ist sie jedoch in den überwiegenden Fällen ungleich Null.

Weiterhin ist eine Einrichtung zum fortlaufenden Ermitteln der Anzahl derjenigen Verbindung ohne Unterlastung vorgesehen. Diese Einrichtung enthält Speichermittel 4, in denen die Zeit des letzten Auftretens einer Benutzerzelle bei den jeweiligen Verbindungen abgelegt ist. Beim erneuten Auftreten einer Benutzerzelle für eine bestimmte Verbindung wird von einer Steuer- und Auswerteeinrichtung 5 mittels einer Zeitnahmeeinheit 6 der Auftrittszeitpunkt bestimmt und dieser mit dem vorherigen, in den Speichermitteln 4 abgelegten vorherigen Zeitpunkt verglichen und danach der Zeitpunkt des nunmehr letzten Auftretens in den Speichermitteln 4 abgelegt. Der Vergleich des aktuellen Zeitpunktes und des davor zuletzt aufgetretenen Zeitpunktes erfolgt derart, daß von dem aktuellen Zeitpunkt der Zeitpunkt des davor zuletzt aufgetretenen Zeitpunktes subtrahiert wird und die sich daraus ergebende Differenz dem Kehrwert eines aktuellen Zuteilungswertes gegenübergestellt wird. Ist die Differenz der beiden Zeitpunkte kleiner als der Kehrwert des aktuellen Aufteilungswertes, dann arbeitet die jeweilige Verbindung im Überlastbereich. Ist sie dagegen größer als der Kehrwert des Aufteilungswertes, so befindet sie sich im Unterlastbereich. Nur für den Fall, daß die Differenz beider Zeitpunkte gleich dem Kehrwert des Aufteilungswertes ist, erfolgt eine gerechte Aufteilung der Übertragungskapazität im Hinblick auf die einzelnen Verbindungen. Anhand dieser Informationen wird von der Steuer- und Auswerteeinrichtung 5 die Anzahl der Verbindungen ohne Unterlast bestimmt und schließlich einer Dividiereinrichtung 7 zugeführt. Der Aufteilungswert kann dabei in Zellen pro Sekunde angegeben werden, wobei der Kehrwert des Aufteilungswertes dann die durchschnittliche Zeitspanne zwischen zwei auftretenden Benutzerzellen ist. In dem Fall werden auch der letzte und der aktuelle Zeitwert in Zellenzyklen gemessen. Zusammen mit dem Zeitpunkt des letzten Auftretens werden auch für jede Verbindung die Betriebsfälle Überlast, Optimalbetrieb oder Unterlast in den Speichermitteln 4 gespeichert. Bei Verwendung dieser gespeicherten Daten kann auf einfache Weise dann die Zahl der Verbindungen ohne Unterlast durch Abzählen bestimmt werden, wobei bestimmte Kennmechanismen beim Auftreten einer Benutzerzelle für die jeweilige Verbindung in Gang gesetzt werden.

Die Berechnung des aktuellen Aufteilungswertes erfolgt rekursiv, indem zunächst die von der Subtrahiereinrichtung 3 bereitgestellte Differenz zwischen der zur Verfügung stehenden und der tatsächlichen Bitrate durch die von der Steuer- und Auswerteeinrichtung 5 bereitgestellte Anzahl von Verbindungen ohne Unterlast mittels der Dividiereinrichtung 7 dividiert wird. Der sich daraus ergebende Quotient wird mit dem in einem Register 8 abgelegten bisherigen Aufteilungswert in einer Addiereinrichtung 9 addiert. Die sich daraus ergebende Summe bildet den neuen, aktuellen Aufteilungswert, der nun in das Register 8 eingeschrieben wird. Dieser Wert wird zum einen in die rückwärts fließenden RM-Zellen mitaufgenommen und zum anderen der Addiereinrichtung 9 sowie der Steuer- und Auswerteeinrichtung 5 für weitere Operationen zur Verfügung gestellt.

Um Komplikationen bei der Division in der Dividiereinrichtung 7 im Falle, daß die Zahl der Verbindungen ohne Unterlast gleich Null ist, zu verhindern, wird in dem Fall der Quotient gleich Null gesetzt. Das bedeutet, daß alle Verbindungen im Unterlastbetrieb arbeiten und daher den Aufteilungswert nicht verwenden können. Dabei macht es keinen Sinn, den Aufteilungswert zu verändern und dieser bleibt demzufolge unverändert. Als Startwert für den Aufteilungswert wird bevorzugt bei Initialisierung des Systems der Quotient aus der insgesamt zur Verfügung stehenden Übertragungskapazität und der Anzahl aller möglichen Verbindungen gewählt.

Der Aufteilungswert wird dazu verwendet, das explizite Bitratenfeld jeder auf einem Übertragungskanal 13 rückwärts fließenden RM-Zelle, die die Datenmultiplexeinrichtung 11 passiert, mittels einer Einrichtung 10 zu aktualisieren. Das explizite Bitratenfeld der Zellen wird aber nur dann überschrieben, wenn sein Wert größer als der aktuelle Aufteilungswert ist. Dies erfolgt ebenso wie eine unter Umstände vorzunehmende Aktualisierung der rückwärts fließenden RM-Zellen durch eine Zellenverwaltungseinrichtung 11. Zur Synchronisation des Registers 8 mit dem rückwärts fließenden Zellenstrom kann das Register 8 mit dem Zellentakt getaktet werden.

Eine bevorzugte Ausführungsform der Meßeinrichtung 2 zum Ermitteln der tatsächlichen Bitrate aller Verbindungen zusammen ist in Figur 2 dargestellt. Diese enthält eine Einheit 14, die den vorwärts fließenden Strom der RM-Zellen auf dem Übertragungskanal 12 dahingehend untersucht, ob es sich um eine ABR-Zelle oder um eine andere Zelle handelt. Beim vorliegenden Ausführungsbeispiel gibt die Einheit 14 im Falle, daß es sich um eine ABR-Zelle handelt, einen logische Zustand "1" aus, während sie im anderen Fall einen logischen Zustand "0" ausgibt. Der Ausgangszustand der Einheit 14 wird sowohl einem Schieberegister 15 als auch einer Steuerlogik 17 zugeführt. Darüber hinaus erhält die Steuerlogik 17 den Zustand am Ende des Schieberegisters 15. Das Schieberegister 15 hat beispielsweise eine Länge von 64 Bit, so daß am Ausgang des Schieberegisters 15 ein um 64 Bit und damit um 64 eingetroffene Zellen verzögerter Wert der Steuerlogik 17 zugeführt wird. Durch die Steuerlogik 17 wird ein Auf-Ab-Zähler 16 gesteuert, der beim vorliegenden Ausführungsbeispiel eine Zählbreite von 6 Bit aufweist. Die Steuerlogik 17 steuert dabei den Auf-Ab-Zähler 16 derart, daß im Falle der Gleichheit der beiden an die Steuerlogik 17 angelegten Zustände weder ein Ab- noch ein Auf-Zählvorgang erfolgt. Für den Fall, daß der Zustand am Ausgang des Schieberegisters 12 gleich "1" und der Zustand am Ausgang der Einheit 14 "0" ist, wird inkrementiert, während im Fall, daß der Zustand am Ausgang des Schieberegisters 12 gleich "0" und der Zustand am Ausgang der Einheit 11 gleich "1" ist, dekrementiert wird. Der Zählerstand des Auf-Ab-Zählers 16 gibt dabei die Anzahl der im Schieberegister 15 enthaltenen Zustände "1" und damit die tatsächliche Bitrate aller Verbindungen zusammen an und wird somit der Subtrahiereinrichtung 3 zugeführt.

Neben der hier gezeigten sogenannten "Sliding-Window-Methode" können aber auch andere Methoden wie beispielsweise die "Jumping-Window-Methode", "Exponentially-Weighted-Moving Averaye-Methode" und die "Leaky-Bucket-Methode" in gleicher Weise verwendet werden. Jedoch zeichnet sich die oben näher erläuterte Anordnung dadurch aus, daß sie eine schnelle Reaktionszeit und hohe Genauigkeit bei geringem Aufwand bietet.

Bei der "Exponentially-Weighted-Moving Averaye-Methode" wird zunächst der Mittelwert über eine bestimmte Anzahl von aufgetretenen tatsächlichen Bitraten der einzelnen Verbindungen gebildet. Beispielsweise wird der Mittelwert des aufgetretenen tatsächlichen Bitraten von 1 bis n bestimmt. Dieser Mittelwert wird für die nächsten n Bitraten gehalten. Währenddessen wird der Mittelwert für die nun auftretenden tatsächlichen Bitraten von n+1 bis 2n gebildet, der dann wiederum für die nächsten n Bitraten gehalten wird usw.

Bei der "Leaky-Bucket-Methode" wird die tatsächliche Bitrate aller Verbindungen zusammen durch Addition des mit einem Faktor K, der kleiner eins ist, multiplizierten alten Auslastungswertes mit dem mit Eins minus dem Faktor k multiplizierten aktuellen Auslastungswert ermittelt.

## Patentansprüche

1. Verfahren zum Anpassen der Übertragungsbitrate jeder einzelnen von mehreren Verbindungen an die zur Verfügung stehende Bitratenkapazität bei einer nach dem asynchronen Transfermodus arbeitenden Datenmultiplexeinrichtung mit den Verfahrensschritten:
a) Speichern der für alle Verbindungen insgesamt zur Verfügung stehenden Bitrate;
b) fortlaufendes Ermitteln der tatsächlichen Bitrate aller Verbindungen zusammen;
c) fortlaufendes Berechnen der Differenz zwischen der zur Verfügung stehenden und der tatsächlichen Bitrate;
d) fortlaufendes Ermitteln der Anzahl derjenigen Verbindungen ohne Unterlastung;
e) fortlaufendes rekursives Berechnen eines aktuellen Aufteilungswertes aus dem bisherigen Aufteilungswert, der Anzahl der Verbindungen ohne Unterlastung und Differenz zwischen der zur Verfügung stehenden und tatsächlichen Bitrate;
f) Einschreiben des Aufteilungswertes in Kapazitätsverwaltungszellen, wenn der aktuelle Aufteilungswert kleiner ist als der in den Kapazitätsverwaltungszellen bereits enthaltenen Wert; und
g) Einstellen der Übertragungsbitrate jeder einzelnen Verbindung entsprechend dem Wert der jeweiligen Kapazitätsverwaltungszellen.

2. Verfahren nach Anspruch 1,
**dadurch gekennzeichnet,** daß die tatsächliche Bitrate aller Verbindungen zusammen durch kontinuierliche Mittelwertbildung über eine bestimmte Anzahl der jeweils zuletzt aufgetretenen tatsächlichen Bitraten der einzelnen Verbindungen ermittelt wird.

3. Verfahren nach Anspruch 1,
**dadurch gekennzeichnet,** daß die tatsächliche Bitrate aller Verbindungen zusammen durch Mittelwertbildung über eine bestimmte Anzahl von aufgetretenen tatsächlichen Bitraten der einzelnen Verbindungen, anschließendem Halten dieses Mittelwertes bis zur Bildung eines neuen Mittelwertes über die bestimmte Anzahl nachfolgender tatsächlicher Bitraten der einzelnen Verbindungen usw. ermittelt wird.

4. Verfahren nach Anspruch 1,
**dadurch gekennzeichnet,** daß die tatsächliche Bitrate aller Verbindungen zusammen durch Addition der mit einem Faktor kleiner 1 bewerteten alten Last mit dem aktuellen Auslastungswert, der mit 1 minus dem Faktor bewertet ist, ermittelt wird.

5. Verfahren nach Anspruch 2,
**dadurch gekennzeichnet,** daß zur Ermittlung der tatsächlichen Bitrate aller Verbindungen zusammen folgende Schritte vorgesehen sind:
a) Fortlaufendes Feststellen, ob eine von den Verbindungen eingehende Zelle eine Information über die verfügbare Bitrate enthält oder nicht, und Zuordnen einer entsprechenden ersten Variablen;
b) Verzögern der ersten Variablen;
c) Erzeugen eines Steuersignals aus der aktuellen ersten Variablen und einer verzögerten früheren ersten Variablen; und
d) Inkrementieren oder Dekrementieren oder keines von beiden einer zweiten Variablen in Abhängigkeit von dem Steuersignal.

6. Verfahren nach Anspruch 5,
**dadurch gekennzeichnet,** daß einer eingehenden Zelle mit Information über die verfügbare Bitrate ein erster logischer Zustand und den übrigen eingehenden Zellen ein zweiter logischer Zustand zugeordnet wird, daß bei Gleichheit von verzögerter und unverzögerter erster Variable die zweite Variable unverändert bleibt,
daß bei Auftreten des ersten Zustandes bei der unverzögerten ersten Variablen und des zweiten logischen Zustands bei der verzögerten ersten Variablen die zweite Variable inkrementiert wird,
daß bei Auftreten des zweiten logischen Zustandes bei der unverzögerten ersten Variablen und des zweiten logischen Zustands bei der verzögerten ersten Variablen die zweite Variable dekrementiert wird und
daß die zweite Variable die tatsächliche Bitrate aller Verbindungen zusammen darstellt.

7. Verfahren nach einem der Ansprüche 1 bis 6,
**dadurch gekennzeichnet,** daß zum Ermitteln der Anzahl derjenigen Verbindungen ohne Unterlastung jedesmal, wenn eine Verbindung hergestellt wird, die Zeitspanne seit dem letzten Herstellen einer Verbindung bestimmt und mit dem Kehrwert des Aufteilungswertes verglichen wird, wobei eine Unterlast dann gegeben ist, wenn die Zeitspanne größer ist als der Kehrwert des Aufteilungswertes.

8. Verfahren nach einem der Ansprüch 1 bis 7,
**dadurch gekennzeichnet,** daß zum Berechnen des aktuellen Aufteilungswertes der bisherige Aufteilungswert mit dem Quotienten aus der Soll-Istwertdifferenz der Bandbreite und der Anzahl der Verbindungen ohne Unterlast addiert wird.

9. Verfahren nach Anspruch 8,
**dadurch gekennzeichnet,** daß als Startwert für den bisherigen Aufteilungswert der Quotient aus der zur Verfügung stehenden Gesamtbandbreite und der Anzahl aller Verbindungen vorgesehen ist.

10. Anordnung zum Anpassen der Übertragungsbitrate jeder einzelnen von mehreren Verbindungen an die zur Verfügung stehende Bitratenkapazität bei einer nach dem asynchronen Transfermodus arbeitenden Datenmultiplexeinrichtung mit
a) Mitteln (1) zum Speichern der für alle Verbindungen insgesamt zur Verfügung stehenden Bitrate;
b) Mitteln (2) zum fortlaufenden Ermitteln der tatsächlichen Bitrate aller Verbindungen zusammen;
c) Mitteln (3) zum fortlaufenden Berechnen der Differenz zwischen der Verfügung stehenden und der tatsächlichen Bitrate;
d) Mitteln (4, 5, 6) zum fortlaufenden Ermitteln der Anzahl derjenigen Verbindungen ohne Unterlastung;
e) Mitteln (7, 8, 9) zum fortlaufenden rekursiven Berechnen eines aktuellen Aufteilungswertes aus dem bisherigen Aufteilungswert, der Anzahl der Verbindungen ohne Unterlast und der Differenz zwischen der zur Verfügung stehenden und der tatsächlichen Bitrate;
f) Mitteln (10) zum Einschreiben des Aufteilungswertes in Kapazitätsverwaltungszellen, wenn der aktuelle Aufteilungswert kleiner ist als der in den Kapazitätsverwaltungszellen bereits enthaltene Wert; und
g) Mitteln zum Einstellen der Übertragungsbitrate jeder einzelnen Verbindung entsprechend dem Wert der jeweiligen Kapazitätsverwaltungszellen.
